Europäisches Patentamt

European Patent Office

Office européen des brevets

(11) Veröffentlichungsnummer: **0 282 885**
**A2**

## (12) EUROPÄISCHE PATENTANMELDUNG

(21) Anmeldenummer: 88103682.6

(22) Anmeldetag: 09.03.88

(51) Int. Cl.⁴: **B29C 67/22**

(30) Priorität: 19.03.87 DE 3709038

(43) Veröffentlichungstag der Anmeldung:
21.09.88 Patentblatt 88/38

(84) Benannte Vertragsstaaten:
**DE ES FR GB IT SE**

(71) Anmelder: **BASF Aktiengesellschaft**
**Carl-Bosch-Strasse 38**
**D-6700 Ludwigshafen(DE)**

(72) Erfinder: **Nehrig, Jürgen**
**Theodor-Heuss-Strasse 12**
**D-6706 Wachenheim(DE)**

(54) **Verfahren und Vorrichtung zur Herstellung von Formteilen mit Schaumstruktur und einer verdichteten Randzone.**

(57) Bei der Herstellung von Formteilen mit Schaumstruktur und einer verdichteten Randzone wird eine gasbildende Stoffe enthaltende Kunststoffschmelze in ein Formwerkzeug mit veränderbarem Hohlraum in einer solchen Menge eingespritzt, daß die Schaumschmelze den vergrößerten Hohlraum nicht vollständig ausfüllt. Anschließend wird die Schaumschmelze durch Verringerung des Hohlraumes gegen dessen Wandungen gepreßt und unter Bildung einer glatten Oberflächenschicht in dem Formwerkzeug gekühlt. Das Formwerkzeug besteht aus zwei gegeneinander verschiebbaren und zwischen sich einen Hohlraum definierenden Werkzeughälften, wobei die Werkzeughälften in einem den Hohlraum umgebenden äußeren Rahmen geführt sind und die Rahmenteile von den Werkzeughälften unabhängig verschiebbar sind.

EP 0 282 885 A2

# Verfahren und Vorrichtung zur Herstellung von Formteilen mit Schaumstruktur und einer verdichteten Randzone

Die Erfindung betrifft ein Verfahren und eine Vorrichtung nach dem Oberbegriff des Anspruchs 1 bzw. des Anspruchs 5. Grundsätzlich gibt es auf dem hier angesprochenen Gebiet der Verarbeitung von treibmittelhaltigen Kunststoffen zwei Möglichkeiten, Formteile mit Schaumstruktur und einer verdichteten Randzone herzustellen, d.s. das Spritzgießen und das Blasformen.

Beim Spritzgießen von Formteilen aus blähfähigem Kunststoff ist es erforderlich, daß nach dem Vermischen der plastifizierten Kunststoffmasse mit einem gasbildenden Stoff der Schäumprozeß so lange verzögert wird, bis das Gemisch in ein Formwerkzeug eingespritzt wird. Der Schäumprozeß beginnt dabei während, hauptsächlich aber nach Beendigung des Einspritzvorgangs, wobei während der Werkzeugfüllung zumindest an der Fließfront Blasen aufplatzen und an der Werkzeugwand verschmiert werden. Gleichzeitig werden schon teilweise expandierte Schmelzeschichten an der Werkzeugwand verschoben bzw. zusammengedrückt, so daß an den Formteilen Falten entstehen, die eingefroren werden. Dies verursacht erhebliche Oberflächenfehler. Das Expandieren der treibmittelhaltigen Kunststoffmasse erfolgt gegen den Fließwiderstand im Formwerkzeug und ist abhängig von der Fließweglänge, der Fließspaltdicke und der Viskosität. Entsprechend dem Fließwiderstand stellt sich im Formteil ein in der Regel unerwünschtes Dichtegefälle zwischen Anguß und Fließwegende ein. Weil das Expandieren des Kunststoffes im Formwerkzeug wesentlich durch den Fließwiderstand eingeschränkt wird, erstarrt die Schaumschmelze unter erheblichem Treibgasdruck. Dieser Innendruck bewirkt häufig ein Ausbeulen oder Wölben der Formteiloberflächen, wenn die Formteile entformt werden, bevor sie innen vollständig erstarrt sind. Kurze Zykluszeiten lassen sich deshalb im allgemeinen nicht realisieren.

Aus der DE-AS 24 61 580 ist ein Verfahren zur Herstellung von Spritzgußkörpern aus thermoplastischem Kunststoff mit glatter Oberfläche und porigem Kern bekannt. Der wesentliche Unterschied zum konventionellen Spritzgießen liegt darin, daß die Entstehung von Oberflächenrauhigkeiten dadurch vermieden wird, daß das Expandieren der treibmittelhaltigen Schmelze so lange verhindert wird, bis die insgesamt für den Spritzgußkörper erforderliche Schmelze in den Werkzeughohlraum eingespritzt ist. Dazu wird im Werkzeug eine gegenüber dem Treibgasdruck höhere Gasatmosphäre erzeugt. In der letzten Phase der Werkzeugfüllung wird zusätzlich Gas über den Anguß in die Schmelze geleitet, so daß im Formteil ein Hohlraum entsteht. Dieser Hohlraum wird mit Schaum ausgefüllt, sobald das komprimierte Gas wieder aus dem Inneren des Formteils austritt. Das Aufschäumen der Kunststoffmasse im Formwerkzeug erfolgt somit, im Gegensatz zur konventionellen Spritzgießtechnik, nicht in Richtung Fließwegende, sondern in Richtung auf den Anguß. Von einer besseren Oberflächenqualität der Formteile abgesehen weist dieses Verfahren indes die gleichen Nachteile wie die üblichen Spritzgießverfahren auf.

Beim Blasformen von Hohlkörpern aus treibmittelhaltigen Thermoplasten werden mit Hilfe eines Extruders Vorformlinge mit Schaumstruktur, insbesondere schlauchförmige Vorformlinge aus einer Düse ausgetragen. Gemäß der DE-OS 25 40 910 werden die Vorformlinge beidendig geschlossen und durch Beaufschlagung mit Druckluft zur Anlage an die Innenkontur eines Formwerkzeugs gebracht. Nachteilig ist dabei jedoch, daß sich Vorformlinge aus Schaumschmelzen stark auslängen und nur in geringem Umfang gedehnt werden können. Darüber hinaus lassen sich geringe Formteildichten nur bedingt erreichen, da das Treibgas in den Vorformlingen durch das Blasmedium komprimiert wird.

Mit der Erfindung soll die Herstellung von Formteilen mit Schaumstruktur und verdichteter Randzone einfacher und wirtschaftlicher durchführbar sein, und es soll insbesondere eine homogene Schaumstruktur sowie eine in weiten Bereichen beliebig wählbare Formteildichte erreichbar sein.

Zur Lösung dieser Aufgabe werden die Maßnahmen nach dem Kennzeichen des Anspruchs 1 vorgeschlagen.

Erfindungsgemäß können Formteile aus praktisch allen thermoplastisch verarbeitbaren Kunststoffen, wie Polystyrol, Styrolmischpolymerisate, zum Beispiel mit Acrylnitril, Polyvinylchlorid, Polyethylen, Polyisobutylen, Polyamide, Polyurethane, Polyacryl-und -methacrylverbindungen sowie Mischpolymerisate und Polymerisatgemische verschiedener Zusammensetzung hergestellt werden.

Die Kunststoffe enthalten in homogener Verteilung eine den Kunststoff nicht lösende Flüssigkeit, die beim Erwärmen des Kunststoffs als Treibmittel wirkt, oder man verwendet Mischungen aus thermoplastischen Kunststoffen und solchen Stoffen oder Stoffmischungen, welche sich bei den Verarbeitungstemperaturen unter Bildung von Gasen zersetzen. Als solche gasabspaltenden Treibmittel eignen sich beispielsweise Ammoniumbicarbonat, Natriumbicarbonat oder auch Mischungen dieser Verbindungen mit organischen Säuren, sowie Azoverbindungen, wie Azodicarbonamid, oder auch Nitrosoverbindungen und Hydrazinderivate. Die Auswahl der Treibmittel richtet sich in erster Linie nach der Verarbeitungstemperatur der thermoplastischen Kunststoffe. Ihr Anteil beträgt im allgemeinen etwa 0,05 bis 15 Gew.%, bezogen auf das Gesamtgewicht der Kunststoffmasse. Die Treibmittel werden zweckmäßigerweise dem Kunststoff in einem Extruder hinzugefügt, während die Kunststoffmasse sich in geschmolzenem Zustand befindet. Dabei wird das Kunststoff-Treibmittel-Gemisch unter solchen Bedingungen der Temperatur und des Druckes gehalten, daß es nicht schäumt.

Die gasbildende Stoffe enthaltende Kunststoffschmelze wird entweder mit Hilfe einer Spritzvorrichtung als ungeformte Masse in den Hohlraum eines Formwerkzeuges eingespritzt, wo sie ausschäumt, oder sie wird aus einer Düse ausgetragen und in Form eines Schaumschmelzstranges in das Formwerkzeug gefördert. Dabei ist der Hohlraum des Formwerkzeuges vergrößert. Dies ergibt sich im einfachsten Fall dadurch, daß das Formwerkzeug geöffnet ist und der Raum zwischen den Werkzeughälften mit Hilfe eines Rahmens kammerartig ausgebildet wird. Im allgemeinen wird die Kunststoffschmelze bzw. die strangförmige Schaumschmelze in einer solchen Menge in den nicht gasdicht verschließbaren Hohlraum gefördert, daß die ausgeschäumte Schmelze den Hohlraum nicht vollständig ausfüllt. Insgesamt hat sich ein Füllgrad von etwa 50 bis etwa 90 % am zweckmäßigsten erwiesen. Die eigentliche Herstellung der Formteile erfolgt dadurch, daß das Hohlraumvolumen verringert wird, d.h., daß die Werkzeughälften gegeneinander verschoben werden, wobei die noch plastische Schaumschmelze komprimiert, gegen die Hohlraumwandungen gepreßt und unter Bildung einer glatten Oberflächenschicht gekühlt wird. Durch entsprechende Ausbildung der Trennebene der Werkzeughälften läßt sich dabei praktisch die gesamte Schaumschmelze aus diesem Bereich verdrängen. Je nach Verschiebung der Werkzeughälften, dem Hohlraumvolumen und dem Füllgrad kann die Dichte der Formteile beeinflußt werden.

Nach einem weiteren Merkmal der Erfindung wird während und/oder nach der Verringerung des Hohlraums Schaumschmelze in den Hohlraum gepreßt. Auf diese Weise ist es möglich, Formteile mit besonders hoher Dichte herzustellen. Die zusätzliche Schaumschmelze fließt dabei über einen Angußkanal von der Spritzvorrichtung bis in den Hohlraum des Formwerkzeuges. Sobald die gewünschte Dichte erreicht ist, wird der Angußkanal im Werkzeugbereich durch einen Schieber bzw. eine Abquetschvorrichtung geschlossen.

Weiterhin kann die verdichtete Randzone der Formteile dadurch beeinflußt werden, daß die Schaumschmelze in dem Hohlkörper während und/oder nach ihrer Verformung mit Hilfe eines gasförmigen oder flüssigen Druckmittels komprimiert wird, wobei gegebenenfalls das Druckmittel in das Innere der Schaumschmelze eingeführt wird. Die Schaumschmelze kann somit unabhängig von der Schließbewegung des Formwerkzeuges zusätzlich verdichtet werden. Als Druckmittel eignen sich beispielsweise Luft, inertes Gas und Wasser. Diese werden im allgemeinen unter einem Druck von 5 bis 50 bar in das Formwerkzeug geleitet. Im Falle der Verwendung flüssiger Druckmittel empfiehlt es sich, diese durch eine elastische Membrane o. dgl. von der Schaumschmelze zu trennen. Auf diese Weise lassen sich verdichtete Randzonen einer Dicke von etwa 0,5 bis etwa 15 mm ausbilden.

Gegenstand der Erfindung ist weiterhin eine Vorrichtung zur Durchführung des Verfahrens, mit einem aus zwei gegeneinander verschiebbaren und zwischen sich einen Hohlraum definierenden Werkzeughälften bestehenden Formwerkzeug, bei dem die Werkzeughälften in einem den Hohlraum umgebenden äußeren Rahmen geführt sind, wobei die Rahmenteile jeweils über die Trennebene der Werkzeughälften vorstehen und an ihren freien Enden Schneidkanten tragen, und bei dem die Rahmenteile von den Werkzeughälften unabhängig verschiebbar sind.

Für eine bessere Verdrängung der Schaumschmelze während der Verringerung des Hohlraumes weist wenigstens eine Werkzeughälfte Verdrängerelemente auf, die jeweils gegen die Kraft eines Federelements in die Trennebene - schwenkbar sind.

Nachfolgend wird die Erfindung unter Hinweis auf die Zeichnungen näher erläutert. Es zeigt

Figur 1 eine Schnittansicht eines Formwerkzeuges entsprechend der Ebene C - D in Figur 2,

Figur 2 eine Querschnittansicht entsprechend der Ebene A - B in Figur 1,

Figur 3 eine Seitenansicht in zentralem Schnitt einer weiteren Ausführungsform eines Formwerkzeuges und

Figur 4 eine Schnittansicht des Formwerkzeuges der Figur 3 entlang der Linie E - F.

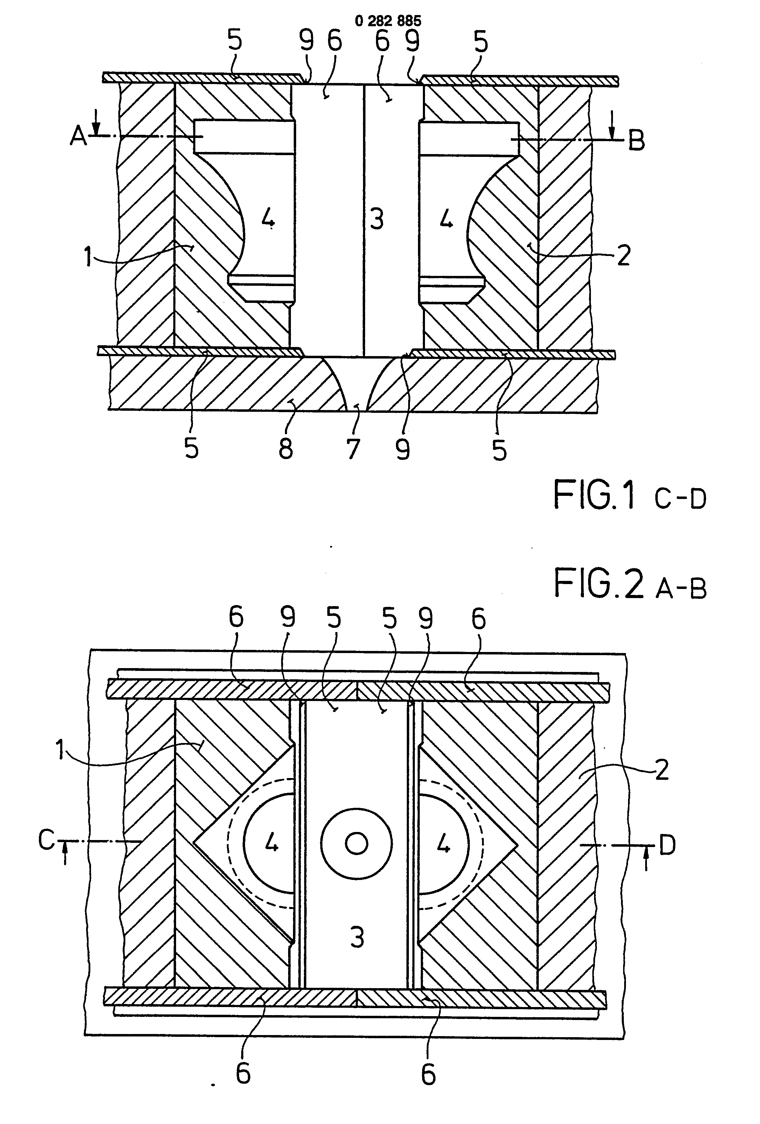

Die Darstellungen gemäß den Figuren 1 und 2 zeigen das Formwerkzeug in der sogenannten Offenstellung, d.h. die zwei Werkzeughälften (1) und (2) sind soweit zurückgezogen, daß sich zwischen ihnen ein Hohlraum (3) ergibt. Der Hohlraum setzt sich zusammen aus dem Raum zwischen den Werkzeughälften und aus den Formnestern (4) in den Werkzeughälften. Mit (5) und (6) sind hin-und herbewegbare Rahmenteile eines äußeren Rahmens bezeichnet, in dem die Werkzeughälften geführt sind. Über einen Anguß (7) in einer Trägerplatte (8) steht der Hohlraum (3) mit einer Plastifiziereinheit in Verbindung. Die Trägerplatte ist erwärmt, um zu verhindern, daß Kunststoffschmelze im Anguß erstarrt, während das eigentliche Formwerkzeug gekühlt ist.

Die gasbildende Stoffe enthaltende Kunststoffschmelze wird aus einer Düse, die sich unterhalb der Trägerplatte (8) befindet und an dieser anliegt in den vergrößerten Hohlraum (3) eingespritzt, wo sie aufschäumt. Während dieser Füllphase sind die verschiebbaren seitlichen Rahmenteile (6) in vorderster Stellung, d.h. sie berühren sich und - schließen den Hohlraum seitlich ab. Die oberen und unteren Rahmenteile (5) befinden sich dagegen in der hintersten Stellung, so daß ein nach oben offener Raum entsteht. Sobald die für das Formteil erforderliche Menge Kunststoffschmelze dosiert ist, werden die oberen und unteren Rahmenteile (5) vorgefahren, wobei die Schmelze unten und gegebenenfalls oben abgeschnitten wird. Hierzu tragen die Rahmenteile (5) an ihren freien über die Trennebene der Werkzeughälften (1, 2) vorstehenden Enden Schneidkanten (9).

Zur Ausbildung der Formteile wird das Hohlraumvolumen verringert, indem die Werkzeughälften (1, 2) gegeneinander verfahren werden. Diese Schließbewegung erfolgt unabhängig von der Schließbewegung der Rahmenteile (5) bzw. (6). Sie kann jedoch so gesteuert werden, daß die Bewegungen insgesamt synchron verlaufen. Ebenso können Unterbrechungen dieser Bewegungen unabhängig voneinander vorgesehen werden, um ein vollständiges Verdrängen der Schaumschmelze in die Formnester (4) zu gewährleisten.

Eine nahezu beliebige Formteildichte läßt sich erreichen, wenn die seitlichen (6) und oberen (5), nicht aber die unteren (5) mit Schneidkanten (9) versehenen Rahmenteile zusammengefahren werden und weiter Kunststoffschmelze über den Anguß (7) in den Hohlraum geleitet wird. Falls eine Angußmarkierung am Formteil nicht stört, kann dieses Nachfüllen zur Erhöhung der Formteildichte auch bei geschlossenem Formwerkzeug erfolgen, wenn in der Trennebene ein Kanal vom Anguß bis zum Formnest geführt ist.

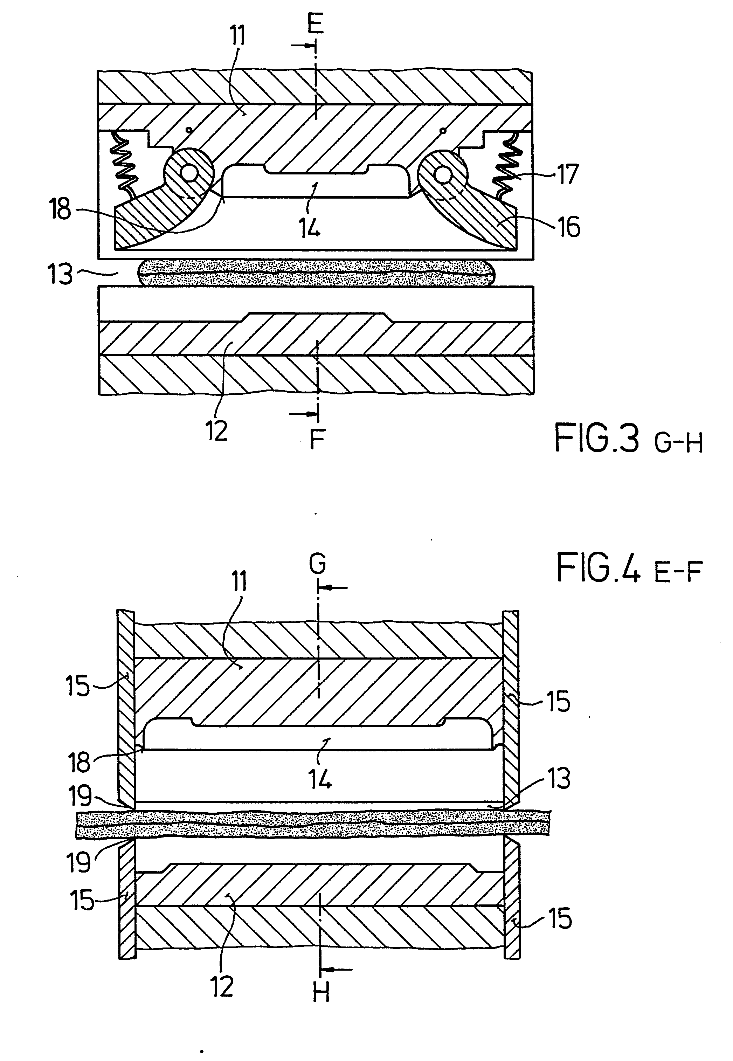

In den Figuren 3 und 4 ist ein Formwerkzeug mit geöffneten Werkzeughälften (11) und (12) gezeigt, um einen extrudierten Schaumschmelzestrang aufzunehmen. Die mit Schneidkanten (19) versehenen verschiebbaren Rahmenteile (15) oberhalb und unterhalb des Formwerkzeuges - schneiden während der Schließbewegung den Schaumschmelzestrang oben und unten ab. Sie bilden gemeinsam mit seitlichen Verdrängerelementen (16) und den Werkzeughälften einen Hohlraum (13) aus. Das Verdrängen der Schaumschmelze in das Formnest (14) erfolgt bei dieser Konstruktion hauptsächlich durch die Verdrängerelemente. Diese sind so ausgebildet und angeordnet, daß sie in die Trennebene der Werkzeughälften schwenkbar sind. Die Schwenkbewegung wird gegen die Kraft einer Schraubenfeder (17) durchgeführt. Am Ende der Schließbewegung der Werkzeughälften, d.h. wenn das Formnest vollständig gefüllt ist, werden etwaige Schaumschmelzereste durch erhabene Kanten (18) im Bereich des Formnestes abgetrennt.

## Ansprüche

1. Verfahren zur Herstellung von Formteilen mit Schaumstruktur und einer verdichteten Randzone, bei dem eine gasbildende Stoffe enthaltende Kunststoffschmelze in den Hohlraum eines Formwerkzeuges eingespritzt und ausgeschäumt oder als Schaumschmelzestrang in das Formwerkzeug gefördert wird und die Schaumschmelze verformt wird, dadurch gekennzeichnet, daß die Kunststoffschmelze bzw. der Schaumschmelzestrang in ein Formwerkzeug mit veränderbarem Hohlraum in einer solchen Menge eingespritzt bzw. gefördert wird, daß die Schaumschmelze den vergrößerten Hohlraum nicht vollständig ausfüllt, und daß die Schaumschmelze durch Verringerung des Hohlraums gegen dessen Wandungen gepreßt und unter Bildung einer glatten Oberflächenschicht in dem Formwerkzeug gekühlt wird.

2. Verfahren nach Anspruch 1, dadurch gekennzeichnet, daß während und/oder nach der Verringerung des Hohlraums Schaumschmelze in den Hohlraum gepreßt wird.

3. Verfahren nach Anspruch 1, dadurch gekennzeichnet, daß die Schaumschmelze in dem Hohlraum während und/oder nach ihrer Verformung mit Hilfe eines gasförmigen oder flüssigen Druckmittels komprimiert wird.

4. Verfahren nach Anspruch 3, dadurch gekennzeichnet, daß das Druckmittel in das Innere der Schaumschmelze eingeführt wird.

5. Vorrichtung zur Durchführung des Verfahrens nach den Ansprüchen 1 bis 4, mit einem aus zwei gegeneinander verschiebbaren und zwischen sich einen Hohlraum definierenden Werkzeughälften bestehenden Formwerkzeug, dadurch gekennzeichnet, daß die Werkzeughälften (1, 2) bzw. (11, 12) in einem den Hohlraum (3, 13) umgebenden äußeren Rahmen geführt sind, wobei die Rahmenteile (5, 6) bzw. (15) jeweils über die Trennebene der Werkzeughälften vorstehen und an ihren freien Enden Schneidkanten (9, 19) tragen, und daß die Rahmenteile von den Werkzeughälften unabhängig verschiebbar sind.

6. Vorrichtung nach Anspruch 5, dadurch gekennzeichnet, daß wenigstens eine Werkzeughälfte (11) Verdrängerelemente (16) aufweist, die jeweils gegen die Kraft eines Federelements (17) in die Trennebene der Werkzeughälften schwenkbar sind.

FIG.1 C-D

FIG.2 A-B

620/86

0 282 885

FIG.3 G-H

FIG.4 E-F

620/86